# FASCICULE DE BREVET EUROPEEN

(11) **EP 1 150 064 B1**
(45) Date de publication et mention de la délivrance du brevet: **15.08.2007**
(21) Numéro de dépôt: 01400851.0
(22) Date de dépôt: 03.04.2001
(51) Int. Cl.: F21S 8/10

(54) **Dispositif d'éclairage ou de signalisation pour véhicule de haute tenue thermique**
Beleuchtungs- oder Signaleinrichtung für Fahrzeuge mit erhöhter Hitzebeständigkeit
Vehicle lighting or signalling assembly with an enhanced heat stability

(30) Priorité: 28.04.2000 FR 0005496
(43) Date de publication de la demande: 31.10.2001
(73) Titulaire: VALEO VISION, 93012 Bobigny Cédex (FR)
(72) Inventeur: Dinant, Franck, 93012 Bobigny Cédex (FR)
(74) Mandataire: Hervouet, Sylvie

(56) Documents cités:
- EP-A- 0 512 793
- DE-A- 3 616 694
- DE-A- 3 620 800
- FR-A- 2 544 463
- GB-A- 2 022 234
- GB-A- 2 070 755

## Description

L'invention concerne les dispositifs d'éclairage et de signalisation pour véhicule automobile.

On connaît du document EP-0 847 894 un tel dispositif comportant un boîtier, une lampe fixe et un réflecteur monté mobile en étant directement relié au boîtier. Dans certaines applications, par exemple un projecteur antibrouillard, la température en partie supérieure du réflecteur peut atteindre plus de 200°. Une telle température peut causer une déformation et un ramollissement de certaines pièces du dispositif notamment si elles sont en matière plastique. La liaison entre le réflecteur et le boîtier est à cet égard particulièrement critique et ce d'autant plus que le mouvement du réflecteur par rapport à la lampe doit être suffisamment précis pour fournir un faisceau correct en toutes circonstances.

On connaît également du document DE 36 20 800, qui comporte les caractéristiques du préambule de la revendication 1, un projecteur dont le réflecteur en matériau thermodurcissable est monté par trois moyens de fixation dans un cadre en matériau thermoplastique. Ce montage est sécurisé par trois dispositifs de support agissant dans la direction de l'axe optique du projecteur. Le centrage du réflecteur dans le cadre par rapport à l'axe optique est obtenu au moyen de trois dispositifs de clipsage. Le réflecteur est ainsi maintenu en position dans le cadre sans vibrations.

Un but de l'invention est de fournir un dispositif d'éclairage ou de signalisation présentant une résistance accrue à la chaleur, notamment au niveau de la liaison du réflecteur au boîtier.

En vue de la réalisation de ce but, on prévoit selon l'invention un dispositif d'éclairage ou de signalisation pour véhicule comportant un boîtier et un réflecteur, le dispositif comportant un berceau reliant le réflecteur au boîtier et présentant un orifice central prolongé jusqu'au bord périphérique du berceau.

Ainsi, l'ouverture correspond à la zone du berceau qui sinon serait la plus exposée à la chaleur. De plus, l'ouverture permet une certaine dilatation du berceau. On améliore donc la tenue thermique du berceau, ce qui favorise un bon positionnement du réflecteur par rapport à la lampe. En outre, cette ouverture réduit le volume du berceau et lui donne un encombrement permettant certaines cinématiques de montage du berceau par rapport au réflecteur, comme par exemple un assemblage par pivotement, qui sinon seraient interdites. En outre, cette ouverture procure un effet de détrompage pour le montage correct du berceau dans le dispositif. Enfin, elle génère une réduction de matière. Il s'ensuit un gain de poids et de coût, d'autant plus important qu'on utilise habituellement pour ce type de pièce des matières plastiques nobles résistant bien à la chaleur, mais souvent onéreuses.

Le dispositif selon l'invention pourra en outre présenter au moins l'une quelconque des caractéristiques suivantes :
- l'ouverture comprend une échancrure ;
- le berceau est fixé rigidement au réflecteur ;
- le réflecteur est monté mobile par rapport au boîtier ;
- le réflecteur est mobile à rotation par rapport au boîtier ;
- le dispositif comporte une vis montée à rotation sur le boîtier et engrenant avec un filet du berceau ; et/ou
- le dispositif comporte une lampe fixée rigidement au boîtier.

Avantageusement, le dispositif comprend une paroi arrière en matière plastique, un porte-lampe fixé à la paroi arrière et une plaque métallique fixée à la paroi arrière.

Ainsi, la plaque métallique renforce et rigidifie la paroi arrière. La résistance mécanique de cette dernière, même sous l'effet de la chaleur, est donc accrue. De plus, la plaque métallique reçoit une partie de la chaleur de la paroi arrière, voire en outre directement la chaleur de la lampe, et la dissipe dans l'air entourant la plaque (en formant un radiateur) ce qui maintient la paroi arrière à une température relativement basse. Ainsi renforcée et moins chaude, la paroi arrière se déforme moins. On préserve donc le positionnement de la lampe par rapport au réflecteur pour l'obtention d'un faisceau correct.

Avantageusement, le dispositif comporte une glace, une pièce intermédiaire reliant la glace au boîtier et un écran s'étendant en avant d'une zone supérieure du boîtier en direction de la glace.

Ainsi, l'écran reçoit l'air chaud montant. Une partie de la chaleur est donc captée par l'écran et non plus par la pièce intermédiaire. On réduit donc le risque de déformer celle-ci. Quant à l'écran, il peut se déformer dans une large mesure sans nuire au fonctionnement du dispositif.

Avantageusement, il s'agit d'un projecteur.

Avantageusement, il s'agit d'un projecteur antibrouillard.

D'autres caractéristiques et avantages de l'invention apparaîtront encore dans la description suivante d'un mode préféré de réalisation et de variantes donnés à titre d'exemples non limitatifs. Aux dessins annexés :
- la figure 1 est une vue en coupe suivant un plan axial vertical d'un projecteur selon l'invention ;
- la figure 2 est une vue en coupe du projecteur de la figure 1 suivant un plan axial horizontal ;
- la figure 3 est une vue en coupe du projecteur de la figure 1 suivant un plan vertical passant par la vis de réglage de l'inclinaison du réflecteur ;
- la figure 4 est une vue analogue à la figure 3 montrant l'actionnement de la vis de réglage ;
- la figure 5 est un schéma géométrique illustrant le débattement angulaire du réflecteur ;
- la figure 6 est une vue en coupe et en perspective simplifiée du projecteur de la figure 1 ;
- les figures 7 et 8 sont des vues de face et en coupe axiale suivant un plan horizontal du boîtier du projecteur de la figure 1 ;
- la figure 9 est une vue en coupe axiale suivant un plan vertical du boîtier de la figure 7 ;
- les figures 10, 11 et 12 sont des vues de face de dessous et de gauche de la plaque en tôle du projecteur de la figure 1 ;
- les figures 13 et 14 sont des vues locales de la plaque en tôle suivant les plans XIII-XIII et XIV-XIV de la figure 10 ;
- les figures 15 et 16 sont des vues arrière et de dessus du berceau du projecteur de la figure 1 ;
- les figures 17 et 18 sont des vues de gauche et de face du berceau de la figure 15 ;
- les figures 19 et 20 sont des vues de face et de gauche du réflecteur du projecteur de la figure 1 ;
- la figure 21 est une vue du réflecteur suivant la flèche XXI de la figure 19 ;
- la figure 22 est une vue du réflecteur suivant la flèche XXII de la figure 19 ;
- les figures 23, 24 et 25 sont des vues en perspective, de côté et en coupe axiale de la vis de réglage du projecteur de la figure 1 ;
- la figure 26 est une vue de côté du bouton de réglage associé à la vis ; et
- les figures 27, 28 et 29 montrent trois étapes de la cinématique d'assemblage du berceau sur le boîtier.

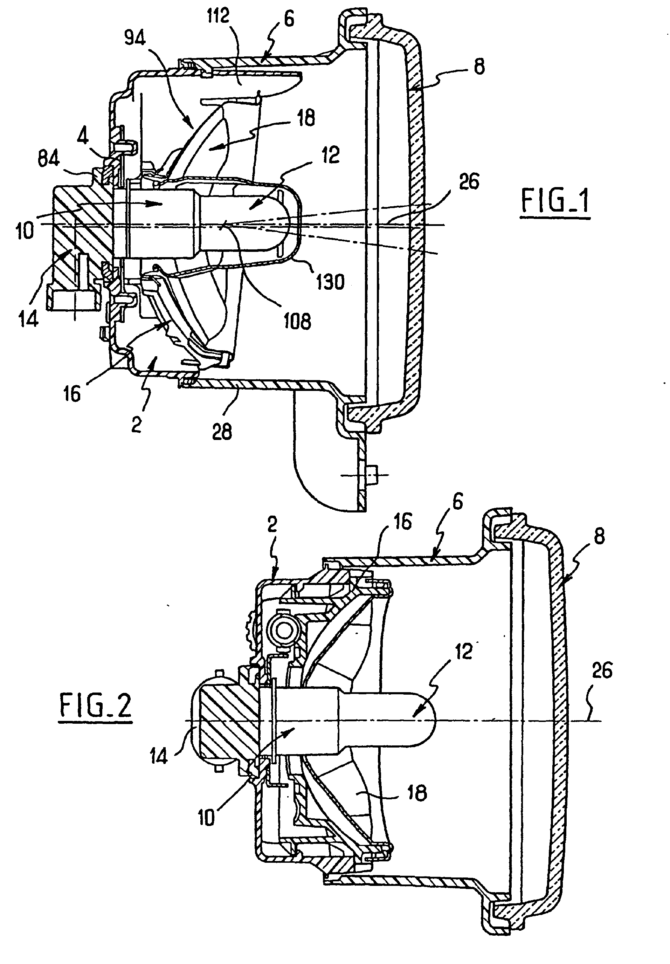

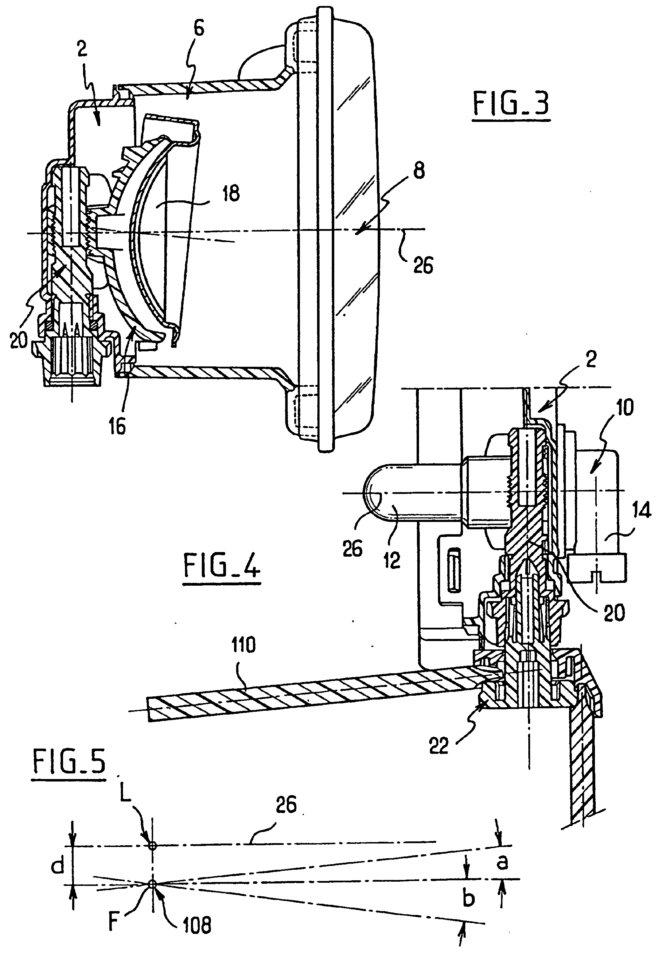

En référence aux figures 1 à 3, le mode de réalisation de l'invention est ici un projecteur antibrouillard. Il comporte un boîtier arrière 2, une plaque en tôle 4 fixée au boîtier, une pièce intermédiaire 6 fixée au boîtier, une glace avant 8 fixée à la pièce intermédiaire 6. Le projecteur comporte un porte-lampe 10 fixé au boîtier et à la tôle, une lampe 12 et un connecteur 14 fixés au porte-lampe. Il comporte un berceau 16 fixé au boîtier et un réflecteur 18 fixé au berceau. Le projecteur comporte en outre une vis de réglage 20 et un bouton de réglage 22 fixé à la vis comme illustré notamment à la figure 4.

On va maintenant décrire plus précisément ces éléments.

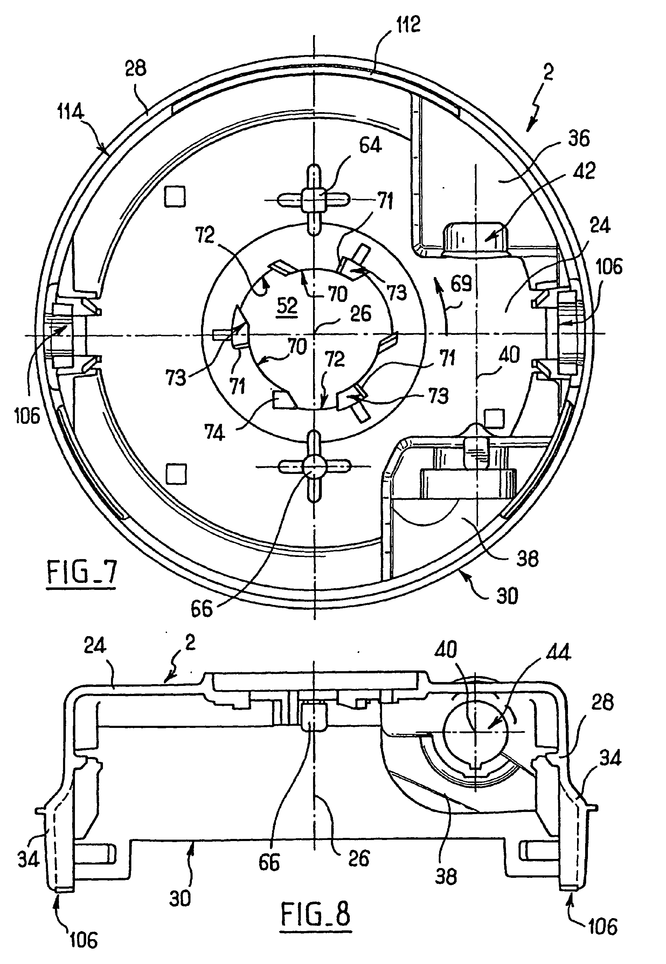

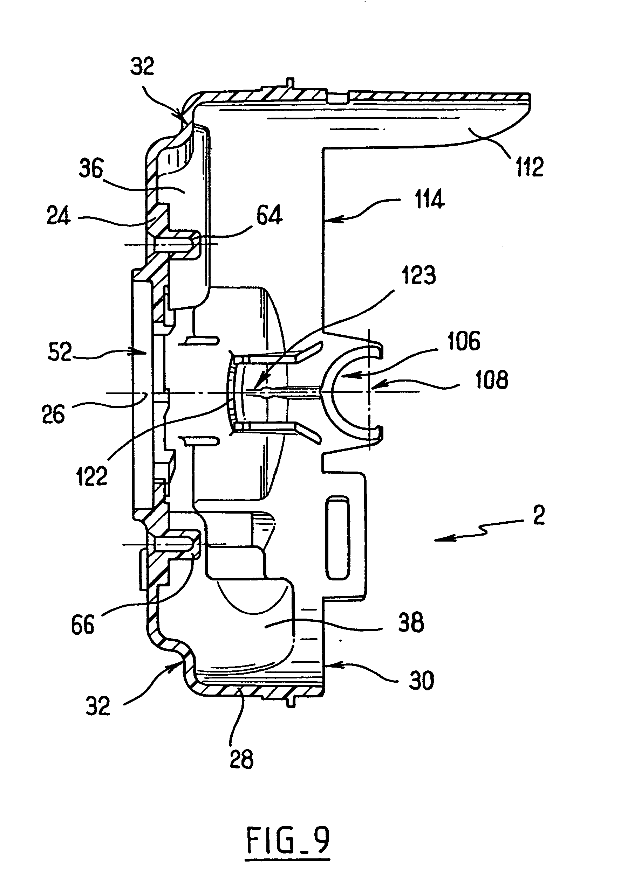

En référence aux figures 7 à 9, le boîtier 2 comporte pour l'essentiel une paroi de fond 24 généralement plane et perpendiculaire à un axe horizontal 26 de la lampe et une paroi latérale cylindrique 28 s'étendant vers l'avant à partir de la paroi de fond. La paroi latérale 28 présente un bord avant circulaire 30 inscrit dans un plan perpendiculaire à l'axe 26. Comme on le voit sur la figure 9, le boîtier présente des épaulements 32 à certains endroits à la jonction entre la paroi de fond 24 et la paroi latérale 28. De plus, la paroi latérale 28 est évasée à certains endroits 34, comme illustré à la figure 8.

En référence notamment à la figure 7, à la jonction entre la paroi de fond 24 et la paroi latérale 28, le boîtier 2 présente deux renflements droits supérieur 36 et inférieur 38 situés respectivement dans les premier et quatrième quadrants en vue de face. Ces renflements ont une forme générale de triangle isocèle rectangle en vue de face sur la figure 7. Ils définissent des portions en saillie dans l'intérieur du projecteur. Les deux renflements 36, 38 présentent deux orifices en regard l'un de l'autre, d'axe commun 40 perpendiculaire à l'axe 26, non sécant avec celui-ci et vertical. L'orifice 42 du renflement supérieur 36 est ouvert vers le bas, borgne vers le haut mais ouvert en direction de l'avant, alors que l'orifice 44 du renflement inférieur est traversant vers le haut et le bas mais fermé latéralement.

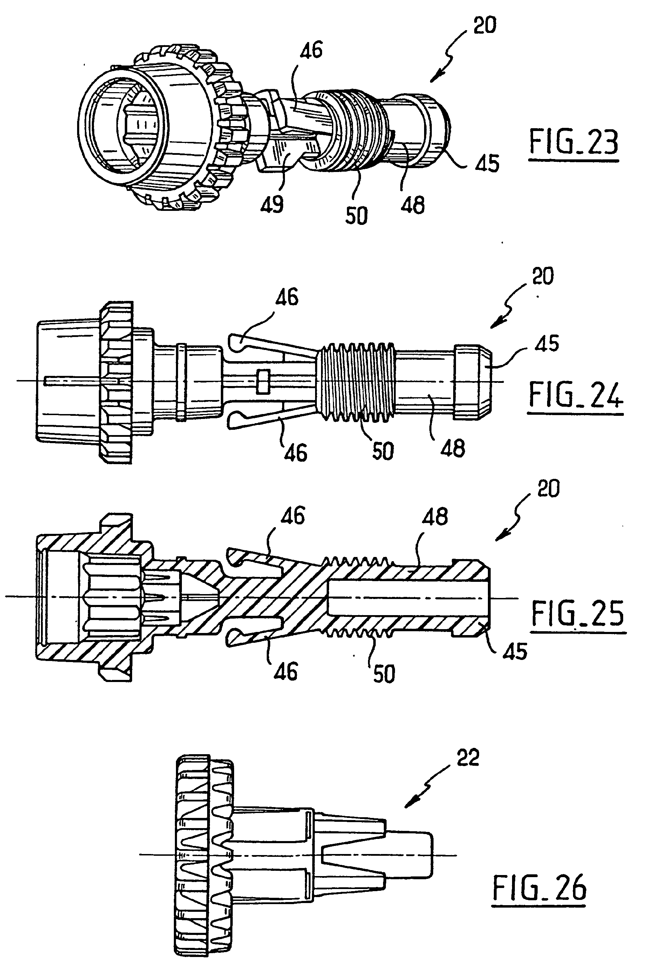

Les orifices 42, 44 sont aptes à recevoir la vis de réglage 20 illustrée aux figures 23 à 25. Cette vis est engagée par son extrémité supérieure 45 dans l'orifice inférieur 44, puis jusque dans l'orifice supérieur 42. Des pattes élastiques 46 sont reliées par leur extrémité avant au corps 48 de la vis et s'étendent au repos en s'éloignant du corps de la vis vers l'arrière. Les pattes 46 se fléchissent au passage de l'orifice 44 puis reprennent leur position initiale après l'arrivée de la vis dans sa position de fonctionnement. Les pattes de clipsage interdisent donc le retrait de la vis vers le bas. La vis est en butée axiale vers le haut contre le fond de l'orifice borgne supérieur 42. La vis est guidée à rotation autour de son axe dans les deux orifices. Entre ceux-ci, le corps de la vis présente un tronçon fileté 50 permettant d'actionner le réflecteur comme on le verra plus bas. Ce positionnement de la vis garantit la bonne position angulaire du filet et donc une coopération précise avec le berceau.

La vis présente une patte de détrompage 49 s'étendant radialement en saillie d'un seul côté de la tige et obligeant à monter la vis en position correcte sur le boîtier faute de quoi la vis ne peut pas être reçue sur le boîtier car la patte butte contre le boîtier.

La paroi arrière 24 du boîtier présente une ouverture centrale 52 destinée à être occupée par le porte-lampe 10.

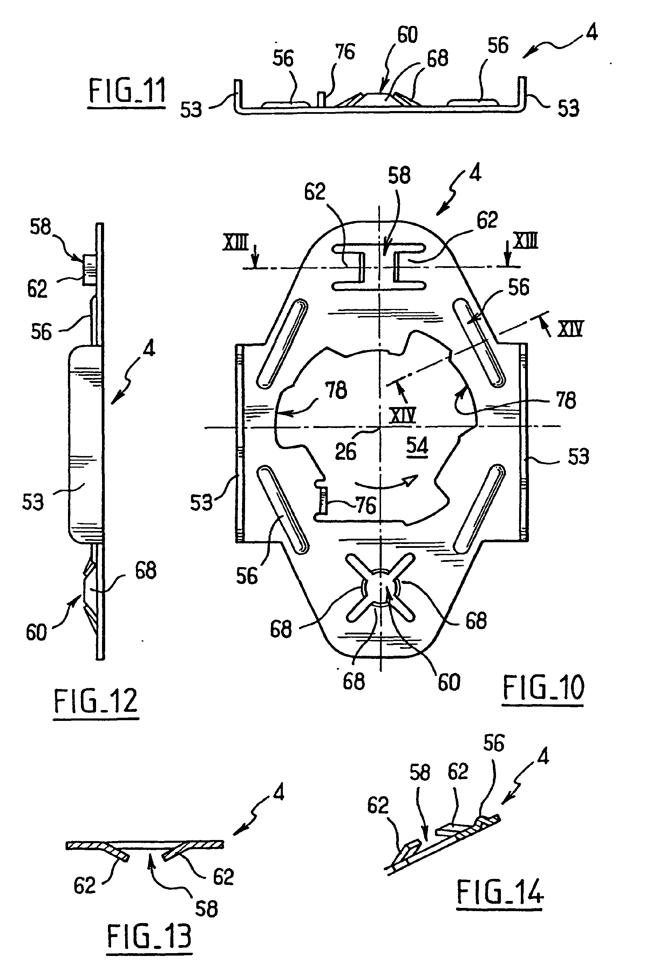

En référence à la figure 10, la plaque en tôle 4 a une forme générale plane essentiellement en losange dont le grand axe est vertical. La plaque en tôle est centrée sur l'axe 26 de la lampe. La plaque en tôle présente deux bords verticaux latéraux rectilignes 53 repliés vers l'avant et perpendiculaires au plan de la plaque en tôle en s'étendant vers l'avant sur environ 3 mm. La plaque en tôle 4 présente une ouverture centrale 54 sensiblement de même forme et de mêmes dimensions que celle 52 de la paroi arrière du boîtier et venant en coïncidence avec celle-ci. La plaque en tôle 4 est fixée à la paroi arrière 24 en regard de la face avant. La plaque en tôle est interposée axialement entre la paroi arrière 24 d'une part, et le berceau 16 et le réflecteur 18 d'autre part. La plaque en tôle présente des nervures de rigidification 56, ici au nombre de quatre, en relief de la face avant de la plaque en tôle. Ces nervures sont parallèles aux côtés inclinés respectifs du losange.

La plaque en tôle présente deux orifices supérieur 58 et inférieur 60 destinés à coopérer avec des doigts s'étendant en saillie de la paroi arrière 24 du boîtier vers l'avant. L'orifice supérieur 58 a une forme de « H » couché. Il est formé par une découpe rectangulaire dans laquelle s'étendent horizontalement en direction l'une de l'autre deux languettes rectangulaires 62. Ces deux languettes sont légèrement inclinées vers l'avant, comme le montre la figure 13. Le doigt 64 du boîtier associé à cet orifice a une forme profilée à section carrée dans un plan perpendiculaire à l'axe 26. Il est dimensionné de sorte que lorsque la plaque en tôle 4 est plaquée en position contre la paroi arrière 24, le doigt 64 pénètre dans l'orifice 58 entre les languettes 62, les faces latérales du doigt frottant contre les languettes voire les fléchissant vers l'avant. En revanche, compte tenu de l'inclinaison des languettes vers l'avant, les forces de friction des languettes sur le doigt à l'encontre de son recul sont beaucoup plus élevées que celles rencontrées lors de son avancée. Le doigt est donc bloqué dans l'orifice à l'encontre de son recul.

La coopération entre l'orifice inférieur 60 et le doigt 66 associé est fondée sur le même principe. Le doigt 66 est à section transversale circulaire. L'orifice 60 a une forme en croix et est défini par quatre languettes triangulaires 68 dont les bords en regard forment la croix. La pointe des languettes est arrondie et concave afin d'épouser la courbure du doigt. Les languettes 68 sont encore inclinées vers l'avant comme illustré à la figure 11. Ici encore, les languettes autorisent l'introduction du doigt 66 dans l'orifice vers l'avant mais interdisent pour l'essentiel son retrait. Les deux couples de doigts et d'orifices assurent la fixation rigide de la plaque en tôle 4 à la paroi arrière 24. La section carrée du doigt supérieur 64 est plus grande que celle du doigt inférieur 66 de sorte que le doigt supérieur 64 ne peut pas être introduit dans l'orifice inférieur 60 sans forcer de façon anormale. De plus, l'inclinaison des languettes interdit de fixer la plaque en tôle à la paroi arrière dans une position telle que les languettes seraient inclinées vers l'arrière. On constitue ainsi des moyens de détrompage qui obligent à monter la plaque en tôle sur le boîtier dans la position unique prévue.

En référence à la figure 7, l'orifice 52 du boîtier présente pour l'essentiel trois tronçons en arc de cercle 70 de même rayon, alternés avec trois tronçons en arc de cercle 72 de même rayon plus grand que celui des rayons 70. Tous les tronçons sont centrés sur l'axe 26.

Les six tronçons sont répartis en trois paires de tronçons adjacents pour la clarté des explications qui suivent. Chaque paire comporte un arc de grand rayon 72 suivi d'un arc de petit rayon 70 par référence au sens trigonométrique 69. A la jonction entre les deux tronçons de chaque paire, le boîtier comporte un relief 71 s'étendant en saillie de la face avant de la paroi arrière, en direction de l'avant. Ce relief 71 présente une rampe hélicoidale avant 73 d'axe 26 s'éloignant de la paroi arrière à mesure qu'on tourne dans le sens 69. La paroi arrière comporte en outre un relief 74 s'étendant au bord de l'orifice 52 entre deux reliefs 72.

La plaque en tôle 4 présente près de son orifice 54 un bord replié 76 venant en butée contre le relief 74 à l'encontre de la rotation de la plaque 4 par rapport à la paroi arrière dans le sens 69. Les arcs de cercle 78, de grand rayon, de la plaque en tôle, homologues de ceux 72 de la paroi arrière, sont plus longs que ces derniers afin de ne pas masquer les rampes 73 en vue de face.

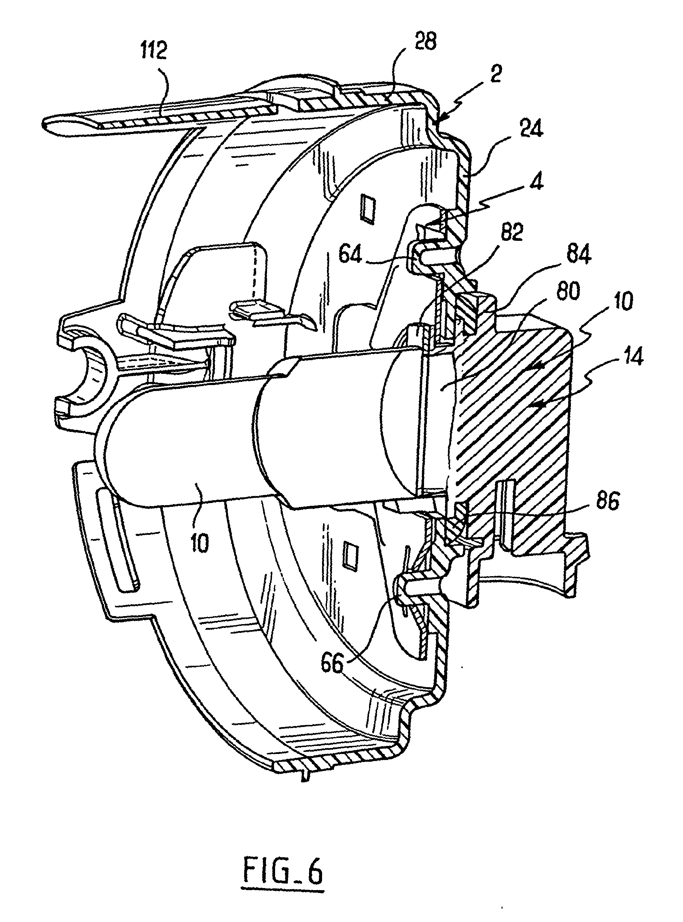

En référence à la figure 6, le porte-lampe 10 comporte un corps 80 ayant une forme générale de révolution et trois languettes 82 dont une seule, supérieure, est illustrée, s'étendant en saillie radiale de la périphérie du corps. Le corps 80 comporte une double collerette arrière 84 munie d'un joint d'étanchéité et de rattrapage de jeux 86.

On suppose que le porte-lampe 10 porte la lampe 86 et que le boîtier 2 porte la plaque en tôle 4. Pour fixer le porte-lampe au boîtier, on introduit le porte-lampe par l'arrière dans l'orifice 52 de la paroi arrière et de la plaque jusqu'à mettre le joint 86 en butée axiale avant sur la face arrière de la paroi arrière, la collerette 84 étant elle-même en butée axiale contre l'arrière du joint. Au cours de ce mouvement, les languettes 82 traversent nécessairement l'orifice en regard des arcs de cercle de grand rayon car elles s'étendent radialement sur une trop grande longueur pour pouvoir pénétrer en regard des arcs de cercle de petit rayon. De plus, en raison de la présente du relief 74, l'un des emplacements de passage des languettes est plus petit que les autres. Sachant que les languettes 82 ont des dimensions correspondant sensiblement à celles des emplacements de passage, il s'ensuit que le porte-lampe ne peut pénétrer dans l'orifice que dans une unique position angulaire autour de l'axe 26 par rapport au boîtier. On obtient donc ici encore un effet de détrompage. Une fois que le joint est en butée contre la paroi arrière, les languettes se trouvent directement en regard des rampes 73. On fait alors pivoter le porte-lampe par rapport au boîtier autour de l'axe 26 dans le sens 69. Les languettes 82 suivent alors les rampes 73 pour achever de pousser le porte-lampe vers l'avant. Les languettes quittent finalement les rampes pour venir en appui axial sur la plaque en tôle 4 au niveau des arcs de cercle de petit rayon. L'une des languettes 82 vient en butée à rotation contre le relief 76 de la plaque en tôle, ce qui bloque la rotation du porte-lampe et définit sa position finale. Ainsi, le porte-lampe est fixé rigidement à la plaque en tôle 4 et au boîtier 2 dans une position très précisément définie grâce notamment au guidage en rotation du corps 80 du porte-lampe contre les arcs de cercle de petit rayon.

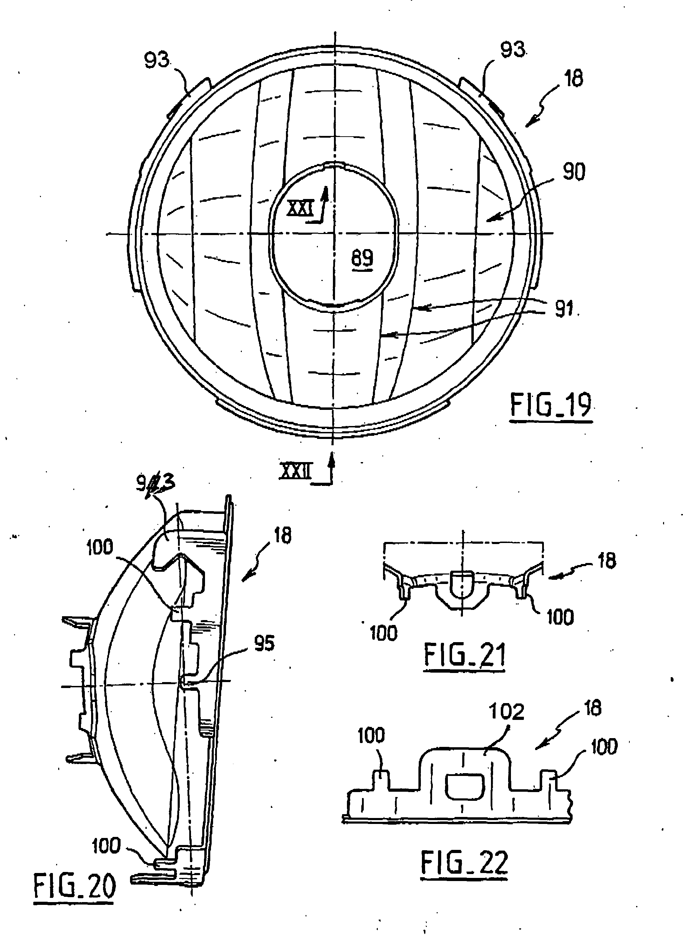

En référence à la figure 19, le réflecteur a une forme générale concave et présente une ouverture 89 en son centre. Sa face réfléchissante interne 90 présente différentes zones formées par des paraboloïdes géométriquement différents et séparées les unes des autres par des arêtes 91 en creux.

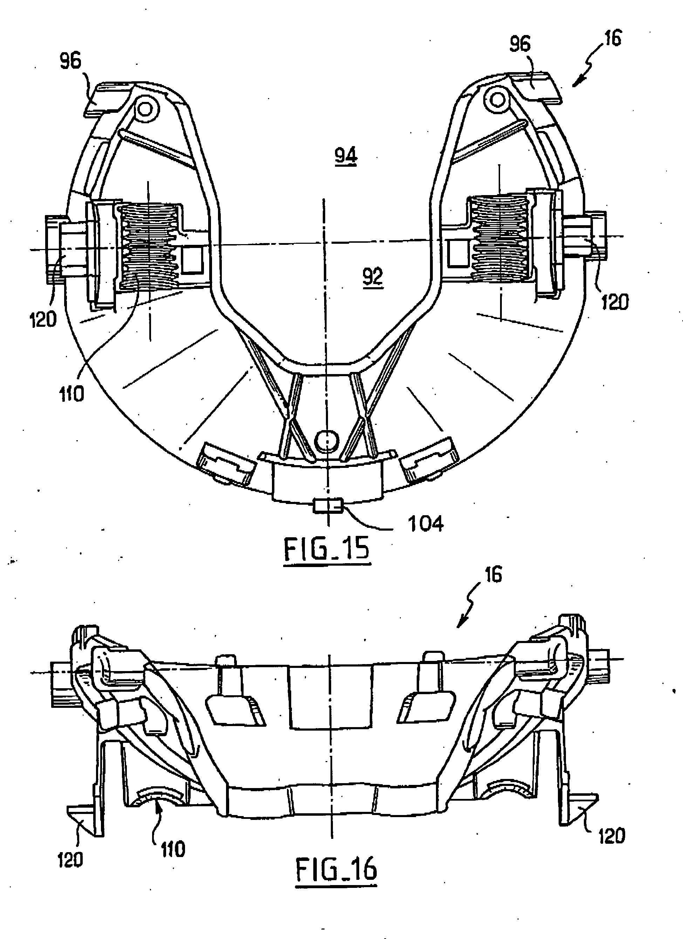

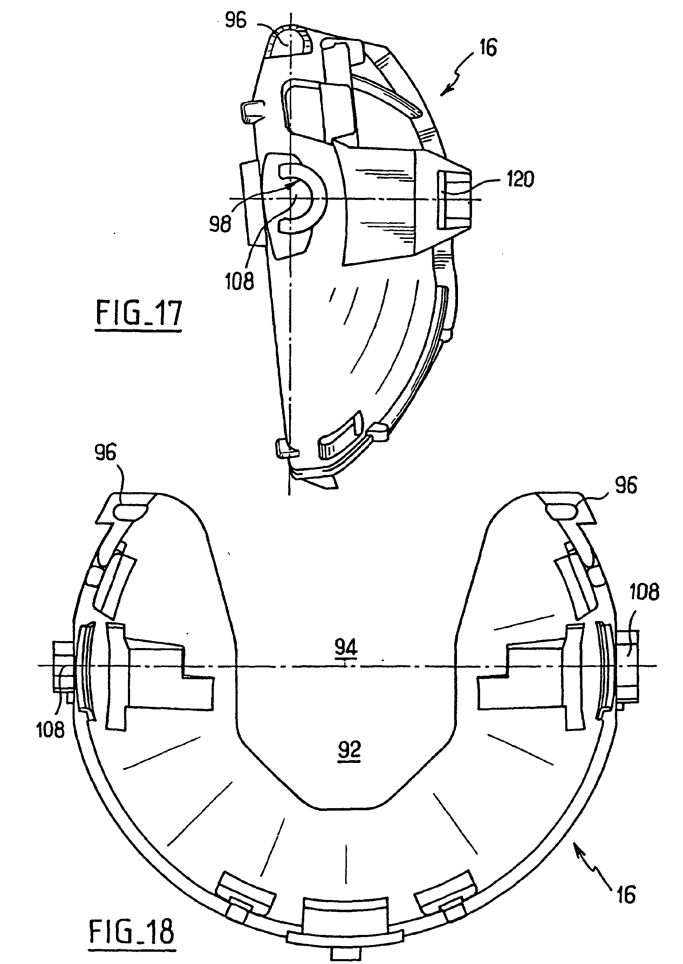

En référence aux figures 15 à 18, le berceau 16 a une forme générale voisine de celle du réflecteur, essentiellement en forme d'hémisphère concave. Il présente lui aussi un orifice central 92 mais celui-ci est prolongé vers le haut par une échancrure 94 reliant l'orifice central 92 au bord périphérique du berceau de sorte que celui-ci a une forme générale en « U » en vue de dos ou de face. Le « U » est essentiellement plein, mis à part l'échancrure 94 et l'orifice 92.

Le réflecteur 18 est fixé rigidement au berceau 16 en position coaxiale. Les moyens de fixation comprennent deux crochets de positionnement supérieurs latéraux 93 du réflecteur, orientés vers le bas et venant en appui sur deux reliefs 96 du berceau contigus à l'échancrure 94. Ils comprennent aussi deux pattes de positionnement gauche et droite 95 du réflecteur reçues vers l'arrière dans deux logements correspondants 98 du berceau. Les deux pattes 95 sont différentes l'une de l'autre de même que les logements 98 de sorte que le réflecteur ne peut être fixé que dans une position par rapport au berceau. Ils comportent encore quatre pattes 100 du réflecteur serties en étant repliées radialement vers l'intérieur dans le berceau, et enfin une patte de clipsage inférieure 102 du réflecteur à clipser sur un ergot inférieur 104 du berceau. Ces différents moyens assurent une fixation robuste et précise du réflecteur au berceau.

Pour fixer le berceau au réflecteur, on engage les reliefs 96 du berceau sous et dans les crochets 93 du réflecteur, le berceau étant incliné par rapport au réflecteur. Puis on rabat le berceau vers le réflecteur en rapprochant leurs parties inférieures pour supprimer l'inclinaison, les pattes 95 pénétrant dans les logements 98 du berceau et la patte 102 se clipsant sur l'ergot 104 du réflecteur. Cette fixation est déjà rigide. Pour la conforter, on replie les pattes 100 du réflecteur dans le berceau. La fixation est ainsi particulièrement robuste. Le montage avec mouvement de rotation préalable est rendu possible par l'espace dégagé par l'échancrure 94.

Le boîtier comporte deux logements cylindriques 106 aptes à recevoir les reliefs 98 du berceau qui ont une forme correspondante pour un guidage du berceau à rotation par rapport au boîtier autour d'un axe horizontal 108 perpendiculaire à celui 26 de la lampe mais s'étendant sous celui-ci. Le berceau comporte deux ergots 120 s'étendant vers l'arrière et aptes à venir en prise par clipsage avec deux reliefs 122 de la face interne de la paroi latérale du boîtier, de sorte que le berceau poussé axialement dans le boîtier vers l'arrière est retenu par clipsage. Les reliefs 122 ont une forme courbe à centre de courbure dirigé vers l'avant, comme illustré à la figure 9, afin d'autoriser la rotation du berceau 16 par rapport au boîtier 2 en dépit de cette fixation. Les deux reliefs 98 sont différents l'un de l'autre, ainsi que les logements 106 pour un effet de détrompage obligeant à monter le berceau sur le boîtier dans la position unique prévue, à savoir échancrure 94 vers le haut.

Dans leur approche vers le relief 122, les ergots 120 sont guidés par une gorge 123 du boîtier présentant une extrémité évasée vers l'avant.

Le berceau présente sur sa face arrière une empreinte filetée 110 de forme creuse généralement cylindrique agencée de sorte que cette empreinte vient en prise avec le filet 50 de la vis de réglage 20 lorsque le berceau est en position. Lorsqu'on fait tourner la vis de réglage autour de son axe, par exemple au moyen du bouton 22 qui la prolonge en partie inférieure, on provoque donc le pivotement du réflecteur 16 vers le haut ou vers le bas autour de l'axe 108. Les filets de la vis 20 et du berceau 16 sont agencés avec un jeu suffisant pour que la rotation du berceau sur un angle peu important n'interrompe pas la prise des filets. De plus, l'empreinte 110 du berceau a un profil légèrement convexe en section verticale passant par l'axe du filet.

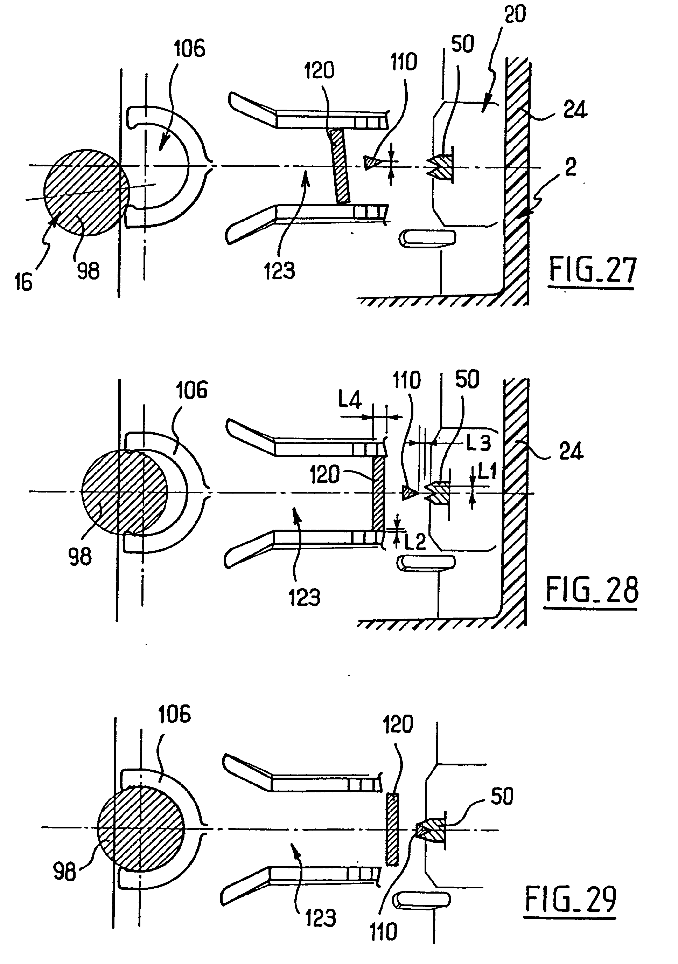

La cinématique de montage du berceau sur le boîtier est illustrée aux figures 27 à 29.

Lors de l'approche du berceau sur le boîtier, les ergots 120 sont guidés dans les gorges 123 avant réception des reliefs 98 dans les logements 106 (figure 27). Lorsque les reliefs 98 arrivent dans les logements 106, les ergots sont encore dans les gorges (figure 28). A ce moment, l'axe du berceau est déjà positionné convenablement par rapport à celui du boîtier. De plus, le jeu vertical L2 entre l'ergot et la gorge est inférieur au jeu vertical entre les filets 110 et 50. De plus, la distance horizontale L3 entre les sommets du filet 100 et le sommet du filet 50 est inférieur à la distance L4 restant à parcourir à l'ergot pour sortir de la gorge.

Lorsque les reliefs sont reçus dans les logements 106 comme sur la figure 29, les filets 50 et 110 sont en prise mutuelle mais les ergots 120 sont sortis des gorges, autorisant le pivotement du berceau par rapport au boîtier par commande de la vis. On voit que ce dispositif assure l'arrivée du berceau sur le boîtier dans la position convenable.

La figure 5 illustre le mouvement du berceau 16 par rapport au boîtier 2. Le berceau peut être ici incliné à partir de l'horizontale d'un angle a de 5,5° vers le haut et d'un angle b de 7,5° vers le bas afin de corriger l'angle du faisceau du projecteur par référence à l'assiette réelle du véhicule. Le foyer F du réflecteur 18 est situé sur l'axe de pivotement 108 verticalement au droit de l'axe 26 de la lampe et du boîtier. La distance verticale d les séparant est très réduite, par exemple de 0,7 mm. L désigne le centre du filament sur la figure 5. La génératrice inférieure du filament cylindrique horizontal s'étendant d'avant en arrière a son centre sensiblement au foyer F.

En référence à la figure 4, le bouton 22 présente une denture circulaire orientée vers le haut permettant son engrènement avec un organe denté allongé 130 tel qu'un tournevis cruciforme pour l'actionnement de la vis de réglage 20 et l'ajustement de l'assiette par exemple manuellement ou automatiquement depuis le tableau de bord. L'actionnement au moyen du tournevis peut être effectué horizontalement, depuis l'avant ou le côté par exemple, ou verticalement depuis le bas comme illustré à la figure 4.

En référence aux figures 6 à 9, le boîtier comporte un écran ou visière 112 de forme cylindrique, d'axe 26, venu de matière avec la paroi latérale 28 du boîtier moulé. Les faces supérieure et inférieure de l'écran sont dans le prolongement des faces externe et interne de la paroi latérale du boîtier. L'écran s'étend en saillie du bord avant 30 vers l'avant, en direction de la glace 8. L'écran 112 s'étend sur un secteur angulaire autour de l'axe 26 inférieur à 90° et ici égal à 66°.

La pièce intermédiaire 6 présente une jupe cylindrique d'axe 26 fixée par son bord arrière à l'extérieur à la paroi latérale 28 du boîtier et portant la glace par son bord avant.

En référence à la figure 1, l'écran 112 est interposé radialement entre la lampe 12, sous l'écran, et la pièce intermédiaire 6 sur l'écran. L'écran s'étend vers l'avant plus loin que la lampe. L'écran protège la pièce intermédiaire à l'égard de l'air chauffé par la lampe et qui s'élève dans l'enceinte intérieure du projecteur.

La plaque en tôle 4 sera par exemple en acier zingué.

La glace 8 pourra être en verre trempé.

La pièce intermédiaire 6, le boîtier 2, le berceau 16, la vis de réglage 20 et le bouton 22 pourront être en PBT (polybutylène téréphtalate), matière plastique résistant bien à la chaleur.

La lampe est par exemple une lampe de marque Philips / Osram / GE de type H 11.

Le réflecteur 18 est ici en tôle d'alliage acier aluminium.

On pourra prévoir sur la lampe 12 un occulteur 130 en un matériau de marque «ALUZI».

Le joint 86 est en silicone.

Bien entendu, on pourra apporter à l'invention de nombreuses modifications sans sortir du cadre de celle-ci.

On pourra prévoir que l'écran 112 est une pièce rapportée par exemple sur le boîtier 2 ou la pièce intermédiaire 6.

Le dispositif pourra être un feu de signalisation.

## Revendications

1. Dispositif d'éclairage ou de signalisation pour véhicule comportant un boîtier (2), un réflecteur (18) **caractérisé en ce que** le berceau (16) et un berceau (16) reliant le réflecteur au boîtier, présente un orifice central (92) prolongé jusqu'au bord périphérique du berceau (16).

2. Dispositif selon la revendication 1, **caractérisé en ce que** l'orifice central (92) comprend une échancrure.

3. Dispositif selon la revendication 1 ou 2, **caractérisé en ce que** le berceau (16) est fixé rigidement au réflecteur (18).

4. Dispositif selon l'une quelconque des revendications 1 à 3, **caractérisé en ce que** le réflecteur (18) est monté mobile par rapport au boîtier (2).

5. Dispositif selon l'une quelconque des revendications 1 à 4, **caractérisé en ce que** le réflecteur (18) est mobile à rotation par rapport au boîtier (2).

6. Dispositif selon l'une quelconque des revendications 1 à 5, **caractérisé en ce qu'**il comporte une vis (20) montée à rotation sur le boîtier (2) et engrenant avec un filet (110) du berceau (16).

7. Dispositif selon l'une quelconque des revendications 1 à 6, **caractérisé en ce qu'**il comporte une lampe (12) fixée rigidement au boîtier (2).

8. Dispositif selon l'une quelconque des revendications 1 à 7, **caractérisé en ce qu'**il comprend une paroi arrière (24) en matière plastique, un porte-lampe (10) fixé à la paroi arrière et une plaque métallique (4) fixée à la paroi arrière.

9. Dispositif selon l'une quelconque des revendications 1 à 8, **caractérisé en ce qu'**il comporte une glace (8), une pièce intermédiaire (6) reliant la glace au boîtier et un écran (112) s'étendant en avant d'une zone supérieure du boîtier en direction de la glace.

10. Dispositif selon l'une quelconque des revendications 1 à 9, **caractérisé en ce qu'**il s'agit d'un projecteur.

11. Dispositif selon l'une quelconque des revendications 1 à 10, **caractérisé en ce qu'**il s'agit d'un projecteur antibrouillard.

## Claims

1. Lighting or signalling device for a vehicle, comprising a case (2), a reflector (18) and a cradle (16) which connects the reflector to the case, **characterised in that** the cradle (16) has a central aperture (92) which extends as far as the peripheral edge of the cradle (16).

2. Device according to claim 1, **characterised in that** the central aperture (92) comprises a cut-out.

3. Device according to claim 1 or claim 2, **characterised in that** the cradle (16) is secured rigidly to the reflector (18).

4. Device according to any one of claims 1 to 3, **characterised in that** the reflector (18) is fitted such as to be mobile relative to the case (2).

5. Device according to any one of claims 1 to 4, **characterised in that** the reflector (18) is mobile in rotation relative to the case (2).

6. Device according to any one of claims 1 to 5, **characterised in that** it comprises a screw (20) which is fitted such as to rotate on the case (2), and engages with a thread (110) of the cradle (16).

7. Device according to any one of claims 1 to 6, **characterised in that** it comprises a lamp (12) which is secured rigidly to the case (2).

8. Device according to any one of claims 1 to 7, **characterised in that** it comprises a rear wall (24) made of plastics material, a lamp-holder (10) which is secured to the rear wall, and a metal plate (4) which is secured to the rear wall.

9. Device according to any one of claims 1 to 8, **characterised in that** it comprises glass (8), an intermediate part (6) which connects the glass to the case and a screen (112) which extends at the front of an upper area of the case in the direction of the glass.

10. Device according to any one of claims 1 to 9, **characterised in that** a headlight is involved.

11. Device according to any one of claims 1 to 10, **characterised in that** a fog headlight is involved.

## Patentansprüche

1. Beleuchtungs- oder Signalgebungsvorrichtung für Fahrzeuge, mit einem Gehäuse (2), einem Reflektor (18) und einer den Reflektor mit dem Gehäuse verbindenden Halterung (16),
**dadurch gekennzeichnet, dass** die Halterung (16) eine mittige, bis zum Umfangsrand der Halterung (16) verlängerte Öffnung (92) aufweist.

2. Vorrichtung nach Anspruch 1,
**dadurch gekennzeichnet, dass** die mittige Öffnung (92) einen Ausschnitt aufweist.

3. Vorrichtung nach Anspruch 1 oder 2,
**dadurch gekennzeichnet, dass** die Halterung (16) starr am Reflektor (18) befestigt ist.

4. Vorrichtung nach einem der Ansprüche 1 bis 3,
**dadurch gekennzeichnet, dass** der Reflektor (18) bezüglich des Gehäuses (2) beweglich montiert ist.

5. Vorrichtung nach einem der Ansprüche 1 bis 4,
**dadurch gekennzeichnet, dass** der Reflektor (18) bezüglich des Gehäuses (2) drehbeweglich ist.

6. Vorrichtung nach einem der Ansprüche 1 bis 5,
**dadurch gekennzeichnet, dass** sie eine Schraube (20) umfasst, die am Gehäuse (2) drehbar montiert ist und in ein Gewinde (110) der Halterung (16) eingreift.

7. Vorrichtung nach einem der Ansprüche 1 bis 6,
**dadurch gekennzeichnet, dass** sie eine am Gehäuse (2) starr befestigte Lampe (12) umfasst.

8. Vorrichtung nach einem der Ansprüche 1 bis 7,
**dadurch gekennzeichnet, dass** sie eine Rückwand (24) aus Kunststoff, einen an der Rückwand befestigten Lampenhalter (10) und eine an der Rückwand befestigte Metallplatte (4) umfasst.

9. Vorrichtung nach einem der Ansprüche 1 bis 8,
**dadurch gekennzeichnet, dass** sie eine Scheibe (8), ein die Scheibe mit dem Gehäuse verbindendes Zwischenstück (6) und einen Schirm (112) umfasst, der sich vor einem oberen Bereich des Gehäuses in Richtung der Scheibe erstreckt.

10. Vorrichtung nach einem der Ansprüche 1 bis 9,
**dadurch gekennzeichnet, dass** es sich um einen Scheinwerfer handelt.

11. Vorrichtung nach einem der Ansprüche 1 bis 10,
**dadurch gekennzeichnet, dass** es sich um einen Nebelscheinwerfer handelt.
